Europäisches Patentamt

European Patent Office

Office européen des brevets

(19)

(11) EP 1 422 596 A2

(12) EUROPEAN PATENT APPLICATION

(43) Date of publication:
26.05.2004 Bulletin 2004/22

(51) Int Cl.⁷: $G06F\ 1/32$, $H04B\ 1/16$

(21) Application number: 03257044.2

(22) Date of filing: 07.11.2003

(84) Designated Contracting States:
AT BE BG CH CY CZ DE DK EE ES FI FR GB GR
HU IE IT LI LU MC NL PT RO SE SI SK TR
Designated Extension States:
AL LT LV MK

(30) Priority: 20.11.2002 GB 0227136

(71) Applicant: Kabushiki Kaisha Toshiba
Tokyo 105-8001 (JP)

(72) Inventors:
• Fitton, Michael Philip
Bristol BS1 4ND (GB)
• Dolwin, Anthony Craig
Bristol BS1 4ND (GB)

(74) Representative: Midgley, Jonathan Lee
Marks & Clerk
57-60 Lincoln's Inn Fields
GB-London WC2A 3LS (GB)

(54) **Reduced power consumption signal processing methods and apparatus**

(57)   This invention is generally concerned with reduced power consumption signal processing methods and apparatus, and in particular with techniques for jointly controlling power supply voltage and clock frequency in a receiver to reduce power consumption.

A method of reducing the power consumption of a data receiver is described. The receiver is configured to process a received signal using repeated implementations of substantially the same first data processing element, a rate of said repetitions being determined by a clock frequency of said first data processing element. The method comprises determining a number of repetitions of said repeated implementations of said first data processing element; processing said receiving signal according to said determined number of repetitions; adjusting said number of repetitions in response to a power saving control signal; and jointly reducing said clock frequency and a power supply voltage to said first data processing element in response to said control signal to reduce said receiver power consumption.

Figure 5

**Description**

This invention is generally concerned with reduced power consumption signal processing methods and apparatus, and in particular with techniques for jointly controlling power supply voltage and clock frequency in a receiver to reduce power consumption.

An important factor in the design of portable communication devices, such as mobile phones, and portable computing devices incorporating wireless communications, such as PDAs (Personal Digital Assistants), is the power consumption of the communications circuitry. This has a direct impact upon battery life and hence upon device size and weight. It is important to reduce power consumption as much as possible consistent with acceptable communications performance, and the present invention addresses this need.

Generally attempts to reduce power consumption has focussed upon developing silicon technology to allow it to operate at lower supply voltages, and upon careful detailed circuit design. More recently a technique known as dynamic voltage scaling (DVS) has been proposed to reduce the power consumption of general purpose portable computing devices. The operation of DVS will briefly be reviewed.

The power consumption of dynamic logic circuitry is related to the frequency at which the circuitry operates, broadly speaking because each time a node within the logic circuit makes a transition a capacitance associated with the node must be charged or discharged, requiring an energy dependent upon the capacitance and upon the voltage to which the node must be charged, or discharged. Thus a first order approximation to the power consumption of a logic circuit is given by equation 1 below, in which it can be seen that power consumption is approximately proportional to operating frequency.

$$P = \sum_{i}^{nodes} F_i^{trans} C_i V_i^2 \qquad \text{(Equation 1)}$$

where P is the power dissipated by circuit, $F^{trans}$ is the transition (operating) frequency for a given node $i$, $C_i$ is the capacitance of node $i$, and $V_i$ is the supply voltage for node $i$.

It can be seen from Equation 1 that power consumption may be reduced simply by reducing the operating frequency of a logic circuit. However a further power saving is possible in some logic circuitry such as CMOS (Complimentary Metal Oxide Semiconductor) circuitry, where the maximum operating frequency is voltage-dependent. Thus the supply voltage of a CMOS or similar microprocessor can be also be reduced when the operating frequency of the processor is reduced to provide a further, quadratically-scaling power saving.

Currently DVS is used in mobile computing applications, typically the operating system evaluating past loading on the system (generally determining the time spent idle), and then setting the operating frequency and voltage accordingly. This is straightforward to implement but is not suitable for real-time processing since such an algorithm takes no account of the processing constraints implicit in real time operation. For this reason DVS has been avoided in real-time data processing.

The present invention address applications of DVS to data processing in a receiver for a communications link, in which a received signal must be processed substantially in real-time. Thus although the receiver may process received signal data in blocks, or may employ an iterative processing approach (for example, turbo equalisation) but, broadly speaking, the receiver must keep up with the rate of incoming signal data. Here it is in this sense that "real-time" is used.

According to a first aspect of the present invention there is therefore provided a method of reducing power consumption in a data receiver, the receiver being configured to process a received signal using repeated implementations of substantially the same first data processing element, a rate of said repetitions being determined by a clock frequency of said first data processing element, the method comprising determining a number of repetitions of said repeated implementations of said first data processing element; processing said receiving signal according to said determined number of repetitions; adjusting said number of repetitions in response to a power saving control signal; and jointly reducing said clock frequency and a power supply voltage to said first data processing element in response to said control signal to reduce said receiver power consumption.

Broadly speaking, the applicant has recognised that the difficulties associated with the application of DVS to real-time processing in a receiver for a data communications link can be mitigated where, in effect, the computational throughput of a data processor may be varied by varying a number of repeated implementations of a data processing element and a rate at which the implementations of the element are repeated. More specifically DVS may be applied to real-time processing where such a data processing element is time multiplexed provided that the rate of multiplexing the element is varied in combination with the power supply voltage variation. Thus the receiver may be configured to process the received signal in substantially real time and the above method used to reduce the power consumption of the receiver whilst maintaining this real time processing.

Preferably the number or rate of repeated implementations (or time multiplexed implementations) of the data processing element is adjusted or controlled to balance the power consumption with other factors such as measured or desired received signal quality. Thus the above-mentioned control signal may be responsive to bit error rate (BER), signal-to-noise and/or interference level, received data type (for example streamed media data versus other data), desired or negotiated quality of service (QoS), and/or operating environment (such as the number of significant multipath components, data rate, and/or total or remaining battery life). Broadly speaking the power saving control signal indicates that a potential power saving is achievable with substantially no reduction or an acceptable reduction in the quality of the (processed) received signal.

It will be appreciated that in embodiments the number of said repetitions need only be adjusted from time to time, or may even be specified at switch on or in a default configuration file. It will also be appreciated that to reduce the power consumption said adjusting should reduce the number of repetitions of implementations of the data processing element, although depending upon the environment and/or circumstances there may also be a need to increase the number of repetitions, for example where an increased processing power is found necessary or desirable, for example to increase a quality of service.

Normally (although not in all cases) the receiver will include a further data processing element subsequent to the repeated implementations of the first data processing element, and in this case the method preferably further includes asynchronously writing into and reading from an intermediate data buffer such as an elastic store, since the clock frequency of the repeated (or multiplexed) first data processing element will in general not be synchronised with that of the subsequent data processing.

In embodiments a set of operating modes may be predetermined, each mode having an associated pair of clock frequency and power supply voltage values and, preferably, power consumption data indicating a power consumption of the mode. Such data may be predetermined in accordance with the receiver hardware and/or a range of design operating conditions. The method may then further include selecting one of these modes according to operating conditions, this simplifying the determination of suitable frequency/voltage combinations.

In one embodiment the first data processing element incorporates at least a correlator for a rake receiver finger and, preferably, a plurality of such correlators or a substantially complete rake finger sub-processor. This arrangement is particularly advantageous as it facilitates adapting the receiver, and hence reducing the receiver power consumption, according to an operating environment or required quality-of-service. This is because the number of multipath reflections, and thus the desired quantity of time-multiplexed rake fingers, is one parameter which can change significantly depending upon the local physical environment of the receiver.

In another embodiment the first data processing element may comprise a turbo equaliser or turbo decoder, or a portion thereof, in which case the repeated implementations of the processing element may comprise a number of turbo equalisation-decoding or turbo decoding iterations. This number of iterations may be varied in broadly the same way as previously described. An acceptable reduction in the number of processing iterations may be inferred, for example from a previously received block, and/or codeword, and/or frame, and/or required quality-of-service.

In another embodiment the first data processing element comprises an interference canceller such as a common channel interference canceller or a portion thereof, for example in a WCDMA (Wide-Band Code Division Multiple Access) system.

The first data processing element may additionally or alternatively comprise one or more finite impulse response (FIR) filter or channel equaliser structures with, for example, time-multiplexed coefficient multiplications. The FIR filter may have a variable number of repeated implementations of an FIR block unit, for example, varied according to channel span. In an equaliser application (that is, a special case of the filter) the skilled person will understand that, like the number of significant multipath reflections, channel span (that is channel length in symbol periods) may vary significantly from one physical location to another.

In a further embodiment the first data processing element may comprise an element of an MLSE (Maximum Likelihood Sequence Estimator) channel equaliser, such as a branch metric processor. Again the skilled person will recognise that the size of the state space for channel calculations depends upon channel span and the number of states.

In another aspect the invention provides a power controller for a data receiver, the receiver being configured to process a received signal using repeated implementations of substantially the same first data processing element, a rate of said repetitions being determined by a clock frequency of said first data processing element, the power controller comprising means for determining a number of repetitions of said repeated implementations of said first data processing element; means for adjusting said number of repetitions in response to a power saving control signal; and means for jointly reducing said clock frequency and a power supply voltage to said first data processing element in response to said control signal to reduce said receiver power consumption.

Again, preferably the power controller incorporates an asynchronous buffer such as an elastic buffer or store, to facilitate synchronisation with subsequent data processing stages. The invention further provides a receiver incorporating the power controller, for example a receiver such as previously described.

In a further aspect the invention provides a receiver for a data communication link, the receiver being configured to process a received signal in substantially real time using repeated implementations of substantially the same first data processing element, a rate of said repetitions being determined by a clock frequency of said first data processing element, the receiver including a control processor coupled to an instruction memory storing processor implementable instructions, the instructions comprising instructions for controlling the receiver to: repeatedly implement said first data processing element; adjust the number of repetitions of said implementation; and jointly control said clock frequency and a power supply voltage to said first data processing element in accordance with said adjustments to control power consumption of said receiver.

The invention also provides processor control code to, when running, implement the above-described methods, power controllers, and receivers. The skilled person will recognise that this code may comprise conventional programme code or microcode or other code such as hardware description code and/or code for setting up or controlling an ASIC or FPGA. Embodiments of the invention may be implemented using a DSP (Digital Signal Processor) or using a conventional microprocessor or microcontroller. The processor control code may be provided on a carrier such as a disk or CD-or DVD-ROM, programmed memory such as read-only memory (Firmware) or on a signal carrier such as an optical or electrical signal carrier. The skilled person will appreciate that a code for embodiment of the invention may be distributed between a plurality of coupled components in communication with one another. The skilled person will also recognise that embodiments of the invention may be implemented in either hardware or software or in a combination of both.

These and other aspects of the invention will now be further described, by way of example only, with reference to the accompanying figures in which:

Figure 1 shows a structure of a generic 3G mobile communications system;

Figure 2 shows an example of a known W-CDMA rake receiver;

Figures 3a, 3b and 3c show, respectively, a generalised rake receiver, a known time-multiplexed rake receiver finger, and despreading circuitry for the finger of Figure 3b;

Figure 4 shows a time-multiplexed rake receiver incorporating DVS control embodying an aspect of the present invention;

Figure 5 shows an embodiment of a receiver according to an aspect of the present invention;

Figures 6a to 6e show embodiments of time multiplexed data processing elements for Figure 5 comprising, respectively, rake fingers, interference cancellation processing, a finite impulse response filter, a turbo equaliser-decoder, and an MLSE signal processor; and

Figure 7 shows a flow diagram illustrating operation of the embodiment of the receiver of Figure 5.

In what follows examples of techniques involving aspects of the present invention will be described with specific reference to a rake receiver for a DS-CDMA (Direct Spread, Code Division Multiple Access) communications system, such as may be employed within a 3G mobile communications network. However applications of embodiments of the invention are not limited to such a receiver, and may be employed with any type of communications receiver in which time multiplexed processing or repeated implementations or iterations of a common data processing procedure may be employed. Thus, for example, embodiments of the invention may be employed within a mobile terminal of a wireless local area network (WLAN), such as a Hiperlan/2 or IEEE 802.11a wireless network.

For further details of Hiperlan 2 reference may be made to the following documents: ETSI TS 101 761-1 (V1.3.1): "Broadband Radio Access Networks (BRAN); HIPERLAN Type 2; Data Link Control (DLC) Layer; Part 1: Basic Data Transport Functions"; ETSI TS 101 761-2 (V1.2.1): "Broadband Radio Access Networks (BRAN); HIPERLAN Type 2; Data Link Control (DLC) Layer; Part 2: Radio Link Control (RLC) sublayer"; ETSI TS 101 493-1 (V1.1.1): "Broadband Radio Access Networks (BRAN); HIPERLAN Type 2; Packet based Convergence Layer; Part 1: Common Part"; ETSI TS 101 493-2 (V1.2.1): "Broadband Radio Access Networks (BRAN); HIPERLAN Type 2; Packet based Convergence Layer; Part 2: Ethernet Service Specific Convergence Sublayer (SSCS)"; ETSI TS 101 475 (V1.2.2): "Broadband Radio Access Networks (BRAN); HIPERLAN Type 2; Physical (PHY) layer"; ETSI TS 101 762 (V1.1.1): "Broadband Radio Access Networks (BRAN); HIPERLAN Type 2; Network Management". These documents are available from the ETSI website at www.etsi.org.

Embodiments of the invention can also be used with other types of receiver such as receivers for personal area networks (PANs) and receivers for Bluetooth (Trade Mark) links (associated with the IEEE 802.15 group of standards, in particular IEEE 802.15.3).

The skilled person will also appreciate, from the embodiments to be described later, that the invention also has potential applications in 4G communications system receivers such as diversity or MIMO (Multiple Input Multiple Output) receivers.

It is helpful at this point to review aspects of 3G digital mobile communications systems, to assist in understanding the context in which some embodiments of the invention operate.

Third generation mobile phone networks use CDMA (Code Division Multiple Access) spread spectrum signals for communicating across the radio interface between a mobile station and a base station. These 3G networks, (and also so-called 2.5G networks), are encompassed by the International Mobile Telecommunications IMT-2000 standard www.ituint, hereby incorporated by reference). Third generation technology uses CDMA (Code Division Multiple Access) and the IMT-2000 standard contemplates three main modes of operation, W-CDMA (Wide band CDMA) direct spread FDD (Frequency Division Duplex) in Europe and Japan, CDMA-2000 multicarrier FDD for the USA, and TD-CDMA (Time Division Duplex CDMA) and TD-SCDMA (Time Division Synchronous CDMA) for China.

Collectively the radio access portion of a 3G network is referred to as UTRAN (Universal Terrestrial Radio Access Network) and a network comprising UTRAN access networks is known as a UMTS (Universal Mobile Telecommunications System) network. The UMTS system is the subject of standards produced by the Third Generation Partnership Project (3GPP, 3GPP2), technical specifications for which can be found at www.3gpp.org. These standards include Technical Specifications 23.101, which describes a general UMTS architecture, and 25.101 which describes user and radio transmission and reception (FDD) versions 4.0.0 and 3.2.2 respectively of which are hereby incorporated by reference.

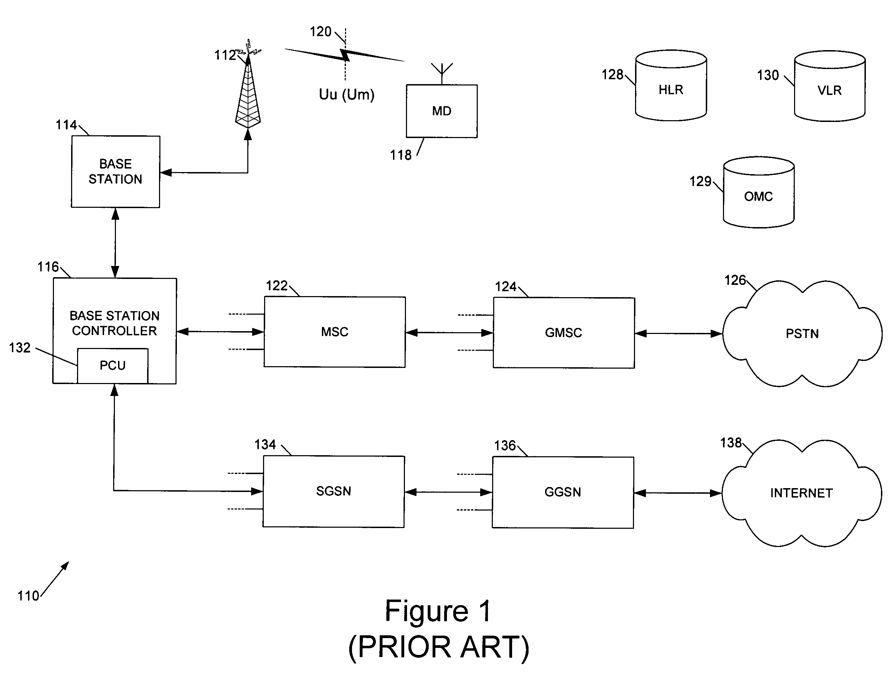

Figure 1 shows a generic structure of a third generation digital mobile phone system 100. In Figure 1 a radio mast 112 is coupled to a base station 114 which in turn is controlled by a base station controller 116. A mobile communications device 118 is shown in two-way communication with base station 114 across a radio or air interface 120, known as a Um interface in GSM (Global Systems for Mobile Communications) networks and GPRS (General Packet Radio Service) networks and a Uu interface in CDMA2000 and W-CDMA networks. Typically at any one time a plurality of mobile devices 118 are attached to a given base station, which includes a plurality of radio transceivers to serve these devices.

Base station controller 116 is coupled, together with a plurality of other base station controllers (not shown) to a mobile switching centre (MSC) 122. A plurality of such MSCs are in turn coupled to a gateway MSC (GMSC) 124 which connects the mobile phone network to the public switched telephone network (PSTN) 126. A home location register (HLR) 128 and a visitor location register (VLR) 130 manage call routing and roaming and other systems (not shown) manage authentication, billing. An operation and maintenance centre (OMC) 129 collects the statistics from network infrastructure elements such as base stations and switches to provide network operators with a high level view of the network's performance. The OMC can be used, for example, to determine how much of the available capacity of the network or parts of the network is being used at different times of day.

The above described network infrastructure essentially manages circuit switched voice connections between a mobile communications device 118 and other mobile devices and/or PSTN 126. So-called 2.5G networks such as GPRS, and 3G networks, add packet data services to the circuit switched voice services. In broad terms a packet control unit (PCU) 132 is added to the base station controller 116 and this is connected to a packet data network such as Internet 138 by means of a hierarchical series of switches. In a GSM-based network these comprise a serving GPRS support node (SGSN) 134 and a gateway GPRS support node (GGSM) 136. It will be appreciated that both in the system of Figure 1 and in the system described later the functionalities of elements within the network may reside on a single physical node or on separate physical nodes of the system.

Communications between the mobile device 118 and the network infrastructure generally include both data and control signals. The data may comprise digitally encoded voice data or a data modem may be employed to transparently communicate data to and from the mobile device. In a GSM-type network text and other low-bandwidth data may also be sent using the GSM Short Message Service (SMS).

In a 2.5G or 3G network mobile device 118 may provide more than a simple voice connection to another phone. For example mobile device 118 may additionally or alternatively provide access to video and/or multimedia data services, web browsing, e-mail and other data services. Logically mobile device 118 may be considered to comprise a mobile terminal (incorporating a subscriber identity module (SIM) card) with a serial connection to terminal equipment such as a data processor or personal computer. Generally once the mobile device has attached to the network it is "always on" and user data can be transferred transparently between the device and an external data network, for example by means of standard AT commands at the mobile terminal-terminal equipment interface. Where a conventional mobile phone is employed for mobile device 118 a terminal adapter, such as a GSM data card, may be needed.

In a CDMA spread spectrum communication system a baseband signal is spread by mixing it with a pseudorandom spreading sequence of a much higher bit rate (referred to as the chip rate) before modulating the rf carrier.

At the receiver the baseband signal is recovered by feeding the received signal and the pseudorandom spreading sequence into a correlator and allowing one to slip past the other until a lock is obtained. Once code lock has been obtained, it is maintained by means of a code tracking loop such as an early-late tracking loop which detects when the input signal is early or late with respect to the spreading sequence and compensates for the change.

Such a system is described as code division multiplexed as the baseband signal can only be recovered if the initial pseudorandom spreading sequence is known. A spread spectrum communication system allows many transmitters with different spreading sequences all to use the same part of the rf spectrum, a receiver "tuning" to the desired signal by selecting the appropriate spreading sequence.

In a 3G mobile phone system the base-band data is spread using a spreading or channelisation code using an Orthogonal Variable Spreading Factor (OVSF) technique. The OVSF codes allow the spreading factor to be changed whilst maintaining orthogonality between codes of different lengths. To increase the number of simultaneous users of the system the data is further spread by a scrambling code such as a Gold code. The scrambling code does not change the signal bandwidth but allows signals to or from different users to be distinguished from one another, again, because the spreading codes are substantially mutually orthogonal. The scrambling is used on top of the channelisation spreading, that is a signal at the chip rate following OVSF spreading is multiplied by the scrambling code to produce a scrambled code at the same chip rate. The chip rate is thus determined by the channelisation code and, in this system, is unaffected by the subsequent scrambling. Thus the symbol rate for a given chip rate is likewise unaffected by the scrambling. Where increased bit rate communications with a mobile station are required more than one such channel may be employed to create a so-called multicode transmission. In a multicode transmission a plurality of data channels are used, effectively in parallel, to increase the overall rate of data transmission to or from a mobile station. Generally the multicode data channels have the same scrambling code but different channelisation codes, albeit preferably with the same spreading factor.

In such a system there are generally a number of different channels some dedicated to particular users and some common to groups of users such as all the users within a given cell or sector. Traffic is carried on a Dedicated Physical Control Channel (DPCH), or on a plurality of such channels in the case of a multicode transmission, as described above. The common channels generally transport signalling and control information and may also be utilised for the physical layer of the system's radio link. Thus a Common Pilot Channel (CPICH) is provided comprising an unmodulated code channel scrambled with a cell-specific scrambling code to allow channel estimation and equalisation at the mobile station receiver. Similarly a Sychnronisation Channel (SCH) is provided for use by the mobile station to locate network cells. A primary SCH channel is unmodulated and is transmitted using the same channelisation spreading sequence in each cell and does not employ a cell-specific scrambling code. A similar secondary SCH channel is also provided, but with a limited number of spreading sequences. Primary and Secondary Common Control Physical Channel (PCCPCH, SCCPCH) having known channelisation and spreading codes are also provided to carry control information. The foregoing signalling channels (CPICH, SCH and CCPCH) must generally be decoded by all the mobile stations and thus the spreading codes (channelisation codes and where appropriate, scrambling code) will generally be known by the mobile station, for example because the known codes for a network have been stored in the user-end equipment. Here the references to channels are generally references to physical channels and one or more network transport channels may be mapped to such a physical channel. In the context of 3G mobile phone networks the mobile station or mobile device is often referred to as a terminal and in this specification no distinction is drawn between these general terms.

One advantage of spread spectrum systems is that they are relatively insensitive to multipath fading. Multipath fading arises when a signal from a transmitter to a receiver takes two or more different paths and hence two or more versions of the signals arrive at the receiver at different times and interfere with one another. This typically produces a comb-like frequency response and, when a wide band signal is received over a multipath channel, the multiple delays give the multiple components of the received signal the appearance of tines of a rake. The number and position of multipath channels generally changes over time, particularly when the transmitter or receiver is moving. However, as the skilled person will understand, a correlator in a spread spectrum receiver will tend to lock onto one of the multipath components, normally the direct signal which is the strongest.

As is known in the art a plurality of correlators may be provided to allow the spread spectrum receiver to lock onto a corresponding plurality of separate multipath components of the received signal. Such a spread spectrum receiver is known as a rake receiver and the elements of the receiver comprising the correlators are often referred to as "fingers" of the rake receiver. The separate outputs from each finger of the rake receiver are combined to provide an improved signal to noise ratio (or bit error rate) generally by cophasing and either by weighting each output equally or by estimating weights which maximise the signal to noise ratio of the combined output. This latter technique is known as Maximal Ratio Combining (MRC).

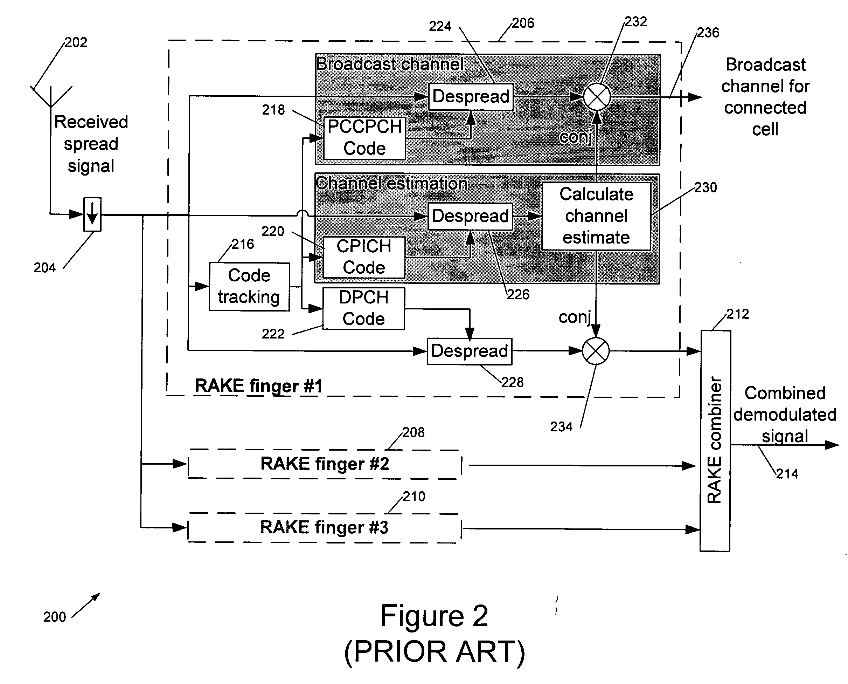

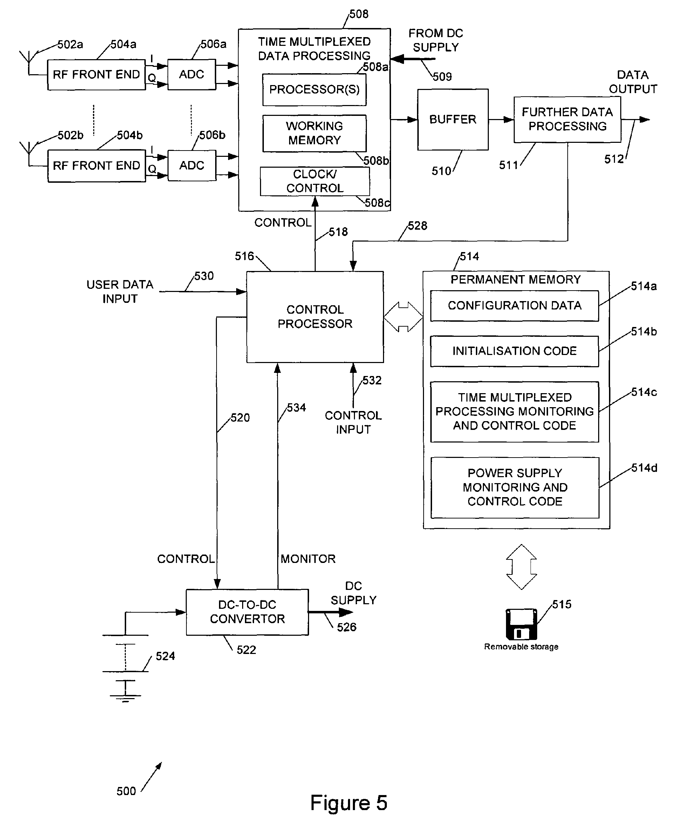

Figure 2 shows a known W-CDMA rake receiver 200 in which CPICH is used to calculate a channel estimate for application to the demodulated dedicated data (DPCH) and broadcast (PCCPCH) channels. (In other arrangements, however, a channel estimate may be determined in a different way, for example using pilot symbols on DPCCH). The receiver 200 has an antenna 202 to receive the spread spectrum signal for the DPCH (Dedicated Physical Data Channel), PCCPCH, and CPICH channels. The signal received by antenna 202 is input to a down converter 204 which down converts the signal to either IF (Intermediate Frequency) or base band for despreading. Typically at this point the signal will be digitised by an analogue-to-digital converter for processing in the digital domain by either dedicated or programmable digital signal processors. To preserve both magnitude and phase information the signal normally comprises I and Q channels although for simplicity these are not shown in Figure 2. In this receiver, and generally in the receiver's described below, the signal processing in either the analogue or the digital domain or in both domains may be employed. However since normally much of the processing is carried out digitally the functional element drawn as blocks in Figure 4 will generally be implemented by appropriate software or, where specialised integrated circuits are available for some of the functions, by appropriately programming registers in these integrated circuits to configure their architectural and/ or functionality for performing the required functions.

Referring again to Figure 2, the receiver 200 comprises 3 rake fingers 206, 208 and 210 each having an output to rake combiner 212 which provides a combined demodulated signal output 214 for further processing in the mobile terminal. The main elements of each rake finger correspond and, for simplicity, only the elements of rake finger 206 are shown.

A code tracker 216 is coupled to the input of rake finger 206 to track the spread spectrum codes for despreading. Conventional means such as a matched filter or an early-late tracking loop may be employed for code tracker 216 and since the DPCH, PCCPCH and CPICH channels are generally synchronised the code tracker 216 need only log on to one of these signals but normally CPICH because this generally has a relatively high signal level. The output of the code tracker 216 controls code generators for PCCPCH 218, CPICH 220, and DPCH 222 which generate spreading codes for cross-correlation with their corresponding channel signals to despread the spread spectrum signals. Thus three despreaders 224, 226, 228 are provided, each coupled to the rake finger input, and each receiving an output from one of the code generators 218 220, 222 to despread the appropriate signal (both channelisation and scrambling codes). As the skilled person would appreciate these despreaders will generally comprise a cross-correlator such as a multiplier and summer.

The CPICH pilot signal is unmodulated so that when it is despread the result is a signal with a magnitude and phase corresponding to the attenuation and phase shift of the multipath channel through which the CPICH signal locked onto by the finger of the rake receiver has been transmitted. This signal thus comprises a channel estimate for the CPICH channel, in particular for the multipath component of this channel the rake finger has despread. The estimate may be used without further processing but, preferably the estimate is averaged over time, over one or more symbol intervals, to reduce noise on the estimate and increase its accuracy. This function is performed by channel estimate 230. It will be appreciated although averaging over a long period will reduce the level of noise, this will also reduce the ability of the receiver to respond quickly to changing channel conditions such as are encountered when, for example, the receiver is operating in a terminal in a car on a motorway.

The channel estimate is conjugated to invert the phase and if necessary normalised so that zero attenuation corresponds to a magnitude of unity, and in this form the conjugated signal can simply be used to multiply another received signal to apply or compensate for the channel estimate. Thus multipliers 232 and 234 apply the channel estimate from channel estimate block 230 to the broadcast control channel PCCPCH and to the desired data channel DPCH respectively. The desired data channels are then combined by rake combiner 212 in any conventional fashion and the broadcast channel outputs from each finger, such as broadcast channel output 236 from rake finger 206, are also combined in a second rake combiner (not shown in Figure 4) to output a demodulated PCCPCH control channel signal.

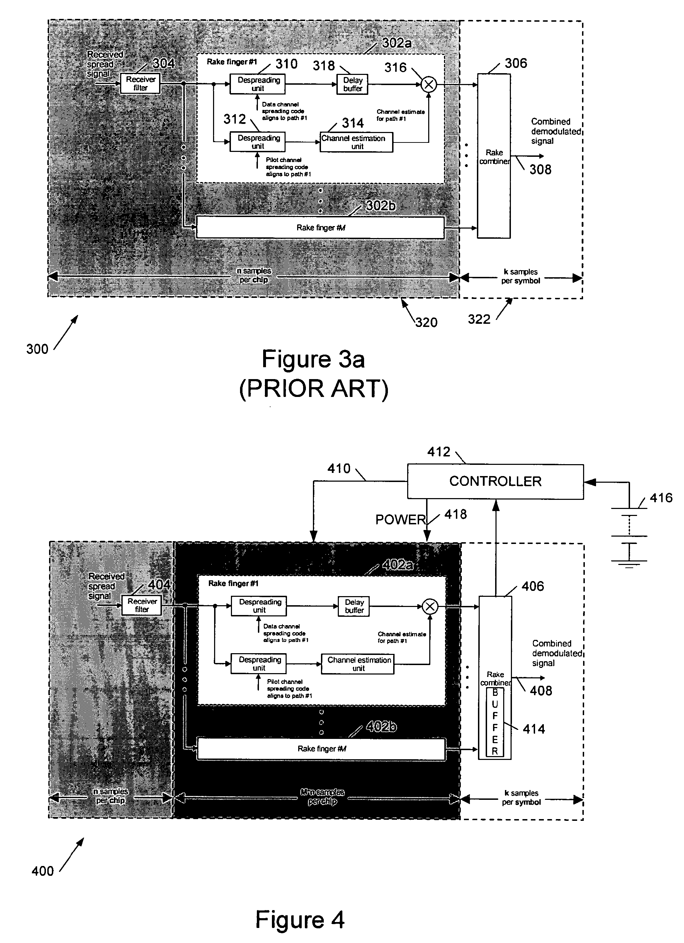

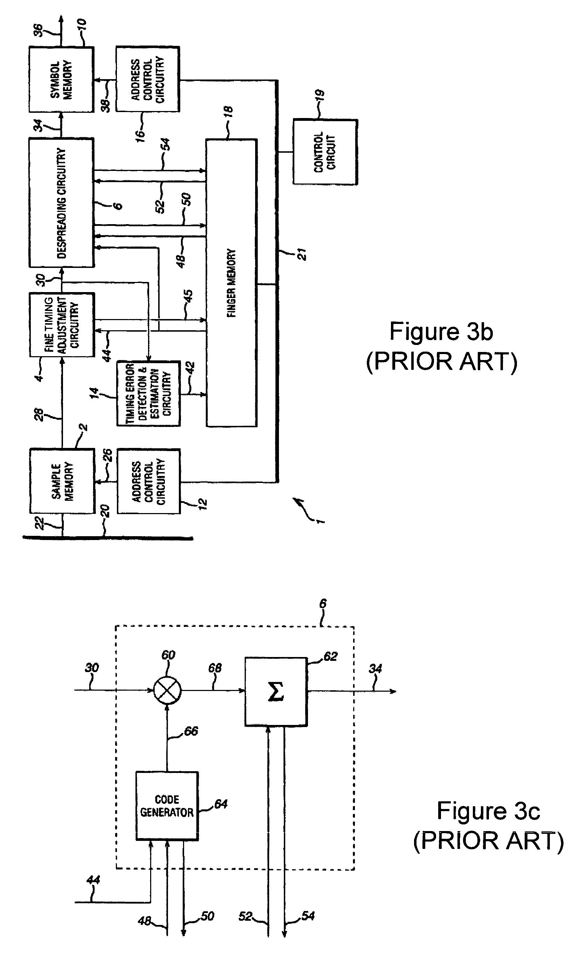

Figure 3a shows a generalised conventional rake receiver 300, to aid the understanding a time multiplexed rake receiver to be described later. Receiver 300 comprises a plurality of $M$ of rake fingers 302a, b (of which only one is shown in detail in Figure 3a) for processing the DPCH channel. A digitised version of the received spread spectrum signal is provided to each rake finger via a front end receiver filter 304 and an output from each rake finger is provided to a rake combiner 306 which provides a combined demodulated signal output 308. For simplicity in Figure 3 searcher fingers, delay lock loops PCCPCH correlators and multicode correlators have been omitted.

Each rake finger 302 comprises a pair of despreading units 310, 312, each also receiving a spreading code time aligned to the multipath path the rake finger is processing. Despreading unit 312 provides an output to a channel estimation unit 314 and the (conjugate) output of this multiplies 316 the output of despreading unit 310 to compensate for the channel response of the processed multipath component. The output of despreading unit 310 is delayed by a delay buffer 318 to compensate for delay introduced by channel estimation unit 314.

The left hand portion of Figure 3a, indicated by dashed box 320, operates at a rate of $n$ samples per chip, to provide sufficient digitised signal resolution to allow the delay of each processed multipath component to be tracked. For example $n = 4$ provides four sample per chip which facilitates tracking time alignment of the chip rate spreading code. However after despreading, time alignment and summation in the rate combiner 306 the signal may now be represented on a symbol-by-symbol basis with k samples per symbol, where typically $k = 1$.

A complete implementation of a rake finger for a UMTS CDMA receiver will generally require at least some of the following elements including (without limitation): a DPCH correlator, additional DPCH correlators for multicode transmissions, a CPICH correlator to provide a channel estimator input, potentially two further correlators to provide a delay locked loop, an additional processing such as channel estimation (for example, averaging), complex multiplication to apply a channel estimate, and means for weighting a channel estimate (for example by a signal-to-noise and interference ratio). Potentially each finger may also need means for monitoring control information such as a PCCPCH correlator for the server based station, and one or more additional correlators for searching for neighbouring base stations and still further correlators for delay locked loops for tracking neighbouring base stations. Still more correlators are likely to be need for path searching, to track variations in the channel impulse response. However, generally only a single rake combiner is needed.

Conventionally these correlators and associated processing functions have been implemented as separate instances of the hardware for each rake finger. Thus, for example a hardware accelerator may comprise eight sets of the above-described DPCH rake hardware to support up to eight rake fingers. Hardware is generally used and sufficient hardware is normally provided to cater for a worst-case scenario, although such a worst case scenario may not often occur in practice. This over-provision may be mitigated by switching off the power to unused rake fingers.

Another approach is described in EP 1 107 471A (and equivalent US 2001 036195), which describe a time division multiplexed rake finger. Figures 3b and 3c, which are taken from EP '471A, show this time multiplexed rake finger 1 and a despreader 6 for the finger, respectively. In outline a received data sample bus provides data via line 22 to a sample memory 2 and thence via line 28 to timing adjust circuitry 4, which provides an output 30 to despreading circuitry 6, this in turn providing an output 34 to a symbol memory 10 which provides a symbol data output on line 36. Time multiplexed finger 1 is controlled by a control circuit 19 via a control bus 21 which drives address control circuitry 12, 16 providing respective addresses 26, 38 to sample memory 2 and symbol memory 10. A finger memory 18 is also coupled to bus 21 as well as to fine timing adjust circuitry 4 via lines 44, 45, and to despreading circuitry 6 via lines 48, 50, 52, 54. Finger memory 18 receives input data from timing error detection and estimation circuitry 14 via line 42. Broadly speaking timing circuitry 14 generates fine (fractional chip period) and coarse (integer chip period) timing data which are stored in finger memory 18 to provide a context associated with each processed multipath signal. This context data is retrieved from finger memory 189 to allow despreading circuitry 6 to be time multiplexed under control of control circuit 19. Despreading circuitry 6, as shown in Figure 3c, comprises a spreading code generator 64, a multiplier 60 and a summer 62 in a conventional manner, the finger memory storing the spreading codes required for each multipath component to be processed.

For further details of the time multiplexed rake finger of Figures 3b and 3c reference may be made to the description in EP 1 107 471A, which is specifically hereby incorporated by reference.

The above-described time-multiplexed rake finger is able to provide a plurality of rake fingers, but at the expense of requiring a fast clock rate. The power consumption of a rake receiver incorporating such a time multiplexed rake finger may be reduced by not carrying out calculations when they are not required. For example, if (as mentioned above) the hardware is configured to provide eight rake fingers and only four dominant multipath components are present there is no need for more than four rake fingers and the hardware may thererfore be switched off half the time.

The applicants have recognised, however, that more significant power savings may be achieved by a combination of reducing the clock rate where the operating environment or user requirements permit (that is, whilst maintaining a real time processing capability) and also by reducing power supply voltage in accordance with dynamic voltage scaling techniques. Thus, for example, if only four rake fingers are required the time multiplexed hardware operates continuously but with a half rate clock and a concomitant reduction in power supply voltage.

Figure 4 shows an embodiment of a rake receiver 400 incorporating time multiplexed rake finger processing in combination with DVS (Dynamic Voltage Scaling) control.

The main elements of the rake receiver 400 of Figure 4 correspond to those of the rake receiver 300 of Figure 3 a. Thus the received spread spectrum signal is processed first by a receiver filter 404, and then by a plurality of rake receiver fingers 402a, b, the outputs of which are combined in a rake combiner 406 to provide a combined demodulated output data signal 408. As before, the receiver filter 404 operates on digitised data at a rate of $n$ sample per chip, and the rake combiner 406 operates on data represented by $k$ samples per symbol. However rake fingers 402a, b are provided by time multiplexed rake finger circuitry operating at an increased data rate of $M \times n$ samples per chip, where $M$ is the number of rake fingers which have been time multiplexed. Thus in the receiver 400 of Figure 4 all $M$ rake fingers 402 may be provided by a single time multiplexed rake finger, such as the rake finger illustrated in Figure 3b. It will be appreciated, therefore, that in Figure 4 the $M$ rake fingers are conceptual and there is only one physical finger.

In rake receiver 400 the number of rake fingers $M$ and the clock rate of the time multiplexed rake fingers 402 is variable and is controlled by control line 410 from a DVS controller 412. For example in a worst case scenario DVS controller 412 may control the time multiplexed rake fingers 402 to provide eight rake fingers for processing eight multipath components (either eight components of a single signal or sets of multipath components of a plurality of signals), controller 412 controlling the time multiplexed processing to operate at a rate of $8n$ samples per chip period.

However where an acceptable signal quality level may be provided by processing a lesser number of multipath components, for example only or two multipath components, DVS controller 412 may control the time multiplexed rake fingers 402 to operate at only *n* or 2*n* samples per chip to provide either one or two rake fingers, to provide the required processing power to keep up with the n samples per chip data input.

Since the clock rate of the time multiplexed rake fingers 402 is variable (as is the number of rake fingers *M)* and may be changed dynamically a buffer 414 is provided between the output of the time multiplexed rake fingers and the input of rake combiner 406. In Figure 4 this buffer is shown as being part of the rake combiner 406. Since the input to buffer 414 from the rake fingers and the outputs from the buffer to the rake combiner will not necessarily be synchronised - that is, there may not be an integer relationship between the clock rate of the rake fingers and the clock rate of the combiner - buffer 414 should allow asynchronous reads and writes. Buffer 414 may comprise, for example one or more elastic stores.

DVS controller 412 has an input from rake combiner 406 or from a later (baseband) processing stage (not shown in Figure 4), to allow the levels of the processed multipath components to be monitored or to allow some quality parameter such as processed signal bit error rate to be monitored. In this way the DVS controller 412 can determine when multipath components with a relatively low signal level compared to other multipath components are being processed and can then control the time multiplexed rake fingers 402 to reduce the number of rake fingers. This allows the number of rake fingers to be varied so that, for example, multipath components of less than a threshold signal level, or making less than a threshold improvement to bit error rate (or some other quality measure) are not processed by the receiver. This in turn allows the clock rate of the time multiplexed rake fingers to be reduced when the number of rake fingers is reduced without any significant loss in real time processing capability. In embodiments the number of rake fingers may be periodically increased to check whether any additional multipath components need to be processed, or to carry out path searching, and/or a signal quality measure, such as BER, may be used as a trigger to determine when the number of time multiplexed rake fingers needs to be increased to maintain signal quality.

As can be seen from Figure 4, DVS controller 412 also incorporates a power supply, receiving a power input from a battery 416, normally the receiver's battery, and providing a controllable voltage power supply output 418 to provide a controllable voltage supply to at least the time multiplexed rake fingers 402. This allows the DVS controller 412 to reduce the power supply voltage to the time multiplexed rake fingers on line 418 when the clock rate (and number of rake fingers) is reduced, to enable the benefit of dynamic voltage scaling. Suitable combinations of frequency and minimum operating voltage will depend upon the hardware employed and may straightforwardly be determined by experiment for example, taking into account, planned operating conditions. Alternatively suitable frequency-voltage pairs may be calculated theoretically, for example based upon an assumed output stage drive impedance and a typical node capacitance, allowing some margin for error, manufacturing tolerances and environmental variations. A combination of both these techniques may also be employed, for example using experimental results to modify theoretically calculated suggested values.

The skilled person will appreciate that the time multiplexed rake fingers 402 in the receiver of Figure 4 may be implemented in software rather in hardware, with similar considerations. Alternatively the time multiplexed processing may comprise a combination of dedicated hardware and processor-implemented operations.

In a more general case the above-described method may be employed with other types of data processing operations and in other types of receiver. Thus in a generalised embodiment there is provided a method of combined time-multiplexed processing and DVS scaling implemented as shown in the receiver 500 of Figure 5.

Referring to Figure 5, this shows a generalised communications receiver with, optionally, a plurality of receive antennas 502a, b, and corresponding rf front ends 504a, b and analogue-to-digital converters 506a, b for diversity reception and/or MIMO signal processing. Analogue-to-digital converters 506a, b provide inputs to a time multiplexed data processing block 508, although in other embodiments the time multiplexed data processing may be performed at a later stage in the receive chain.

The time multiplexed data processing 508, broadly speaking, repeatedly implements a common data processing operation in a time sliced, time multiplexed, or iterative fashion to provide a digital signal processing function or functions. The time multiplexed data processing 508 may comprise time multiplexed hardware, or time multiplexed signal processor control code, or a combination of the two. However, generally speaking data processing 508 comprises one or more (hardware or software) processors 508a, working memory 508b, and clock/control circuitry 508c. The clock/control circuitry controls a number of repeated implementations of the processing function, and also clocks the processing function and is responsive to one or more control signal inputs to allow dynamic variation of this clock frequency and the number of repeated implementations in accordance with a signal from a controller. The time multiplexed data processing 508 also has a DC supply 509, in embodiments separate from the DC supply to other elements of the receiver, to allow the power supply voltage to data processing 508 to be varied independently of the power supply voltage to other portions of the receiver. In this way the clock frequency, the number of time multiplexed instantiations of the data processing and the supply voltage to the data processing may be varied jointly and in combination with one another to achieve dynamic voltage scaling-type power consumption reduction.

Time multiplexed data processing 508 provides an output to an asynchronous buffer 510, such as an elastic store, which in turn provides the data from data processing 508 to a subsequent data processing stage 511, which then provides a data output 512, for example to further baseband data processing. As explained more fully below, data processing 508 may take many forms including (but not limited to) interference cancellation, equalisation such as finite impulse response (FIR) filter equalisation or turbo decoding/equalisation, and maximum likelihood estimation (MLSE) equalisation such as Viterbi equalisation. Likewise the further data processing 511 may take many forms and (without limitation) will often include error processing such as block code error control processing, for example Reed-Solomon processing.

Continuing to refer to Figure 5, a control processor 516 is provided for joint time multiplexing and DVS control as described above. Thus control processor 516 has one or more inputs as shown in Figure 5 for monitoring received signal and other parameters. In particular, but without limitation, processor 516 may have an input 528 from further data processing block 511 (or from time multiplexed data processing 518 or from data processing subsequent to processing 511) for determining received signal parameters such as a number of significant multipath components, a received signal bit error ratio (BER), and/or a received signal-to-noise and/or interference ratio. Control processor 516 may also have a user data input 530, for example from a user interface, to allow a user to specify an operating mode and/or data rate/quality. In a MIMO system, for example, some higher layer entity might specify a number of receive antennas and hence received data streams to employ based, for example, on a requirement of a user. Control processor 516 may also have a control input 532, for example from a baseband data processing stage, to allow processing power and power consumption to be balanced against one another dependent upon a data type specified by an incoming data stream so that, for example, more processing power may be employed with error sensitive or time critical data such as streamed media (audio or video) data.

A DC-to-DC converter 522, such as a switch mode power supply, is connected to a battery 524 for the receiver to provide a variable voltage DC supply 526 for providing power to time multiplexed data processing 508. The power supply may provide a battery voltage or output level monitor signal 534 to control processor 516, for example to allow an automatic DVS-based power saving when battery 524 is running low.

Control processor 516 is also coupled to permanent data memory 514, such as Flash RAM, ROM or EPROM, storing configuration data 514a, DVS-control initialisation code 514b, time multiplexed processing monitoring and control code 514c, and power supply monitoring and control code 514d. The code and/or data in permanent programme memory 514 may also be provided on a removable storage medium 515 such as a computer disk. Configuration data 514a may comprise manufacturer and/or user entered configuration data and may include data defining operating modes of time multiplexed data processing 508, default operating mode selection data, and expected battery life data. An operating mode definition may comprise parameters defining a number of instantiations of a processing operation performed by data processing 508 together with an associated clock frequency and supply voltage; related quality of service information may also be included to facilitate selection of an operating mode. This configuration data provides a further input to control processor 516.

The initialisation code 514b, as described further below, initialises the receiver, and in particular data processing 508, into a default mode of operation. The operation is monitored by time multiplexed processing monitoring and control code 514c, to reduce (or increase) a number of data processing instantiations implemented by data processing 508. Monitoring and control code 514c also communicates with power supply monitoring and control code 514d to monitor and control the supply voltage to data processing 508 by controlling the DC-to-DC converter 522. Thus control processor 516 provides a first control output 518 to clock/control unit 508c of data processing 508 to control a clock frequency and number of data processing instantiations of data processing 508, and a second control output 520 to control the output voltage of power supply 522 provided to time multiplexed data processing 508. The clock frequency, number of data processing instantiations and data processing supply voltage are jointly controlled as described above, in accordance with DVS-based techniques. Preferably processor 516 is configured to reduce the supply voltage to a minimum necessary for satisfactory operation of the receiver according to the circumstances (user requirements, data rate, rf environment and the like).

The skilled person will appreciate that, for simplicity, other standard elements of a receiver, for example synchronisation, are omitted in Figure 5 for clarity. The skilled person will recognise that synchronisation, error control and the like will usually present in a conventional manner.

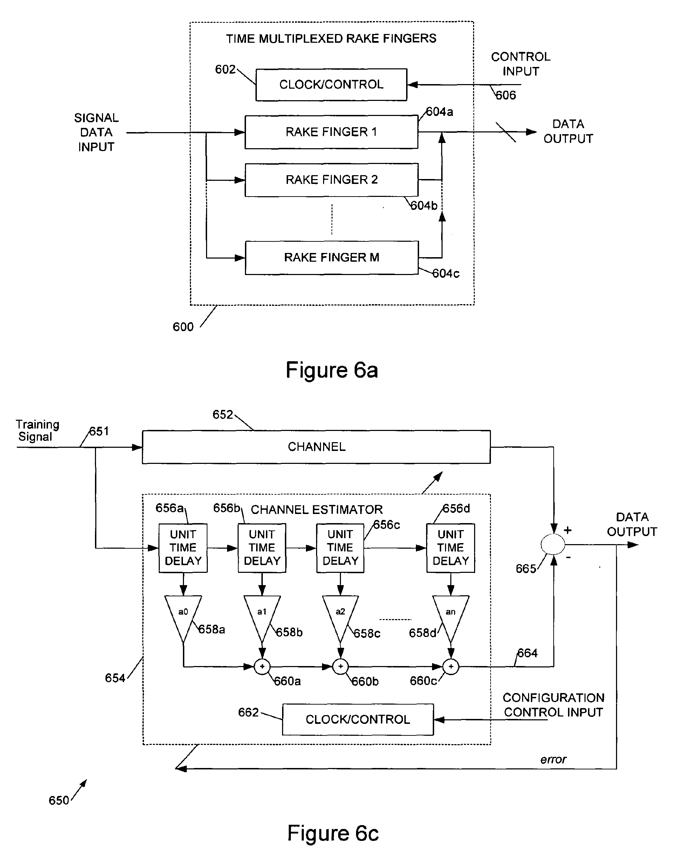

Figures 6a to 6e show examples of data processing operations which may be performed in a time multiplexed or iterative manner by the time multiplexed data processing block 508 of Figure 5.

In Figure 6a the elements surrounded by dashed box 600 comprise a functional representation of the time division multiplexed data processing provided by data processing 508 of Figure 5. Thus the time division multiplexed data processing provides a plurality M of rake fingers 604a, b, c as well as common clock and control circuitry 602 responsive to a control input 606. The time division data processing 600 may comprise a time multiplexed rake finger as described above or some other time multiplexed rake finger processing implementation.

In another embodiment the receiver 500 of Figure 5 may implement a rake receiver incorporating interference cancellation. Such a receiver is described in more detail below and, again, some or all of the signal processing functions enclosed within dashed box 621 may be provided by time multiplexed data processing, under control of a control input 623 to control clock rate for the data processing and the number of data paths processed.

To facilitate the support of higher data rate services it is known to employ Multiple Access Interference (MAI) suppression at the base station to improve the uplink. Multiple access interference rises because the spreading codes of signals received from different users are not normally completely orthogonal. Interference cancellation (IC) receivers in the base station thus attempt to estimate a multiple access interference component which is subtracted from the received signal, either in parallel across all the users or sequentially. The multiple access interference which is cancelled is the interference between multipath components of two received signals.

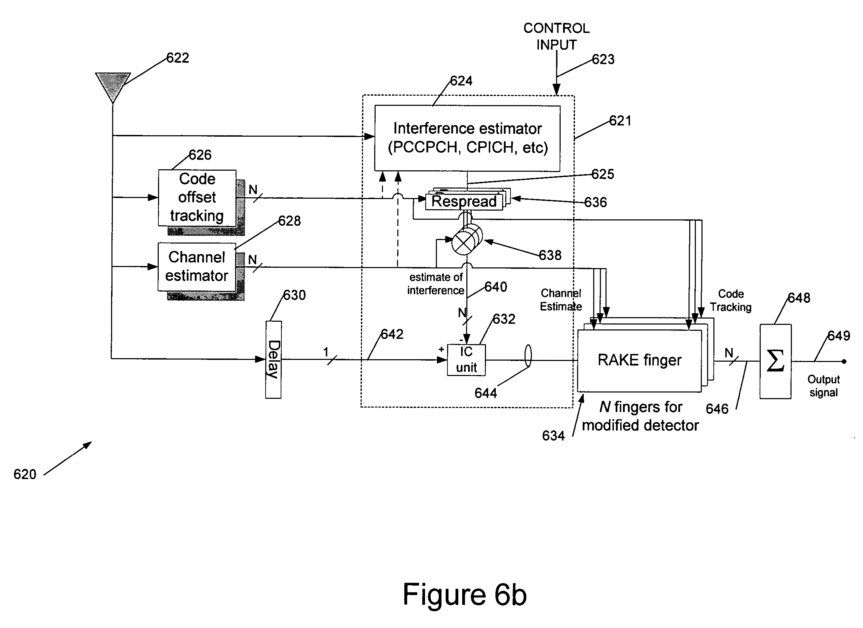

Figure 6b shows an example of a spread spectrum rake receiver 620 with provision for interference cancellation at the chip level. The general arrangement of Figure 6b is suitable for cancelling interference from common channels of a 3G system such as the CPICH, SCH and PCCPCH channels described earlier. The elements and architecture of the receiver of Figure 6b can also be incorporated into other more complex spread spectrum receivers. Normally the interference contribution from a control channel to a dedicated data channel will be removed as the signal power of the control channels is likely to be higher than that of the dedicated data channel but, in principle, the technique could be used to remove dedicated channel interference from a control channel. The receiver of Figure 6b is configured to suppress the interference from one channel, for example a control channel, with one spreading code to another channel, for example a dedicated channel, with another substantially orthogonal spreading code. However because the codes are substantially orthogonal there is no need to subtract one signal from another within a multipath component since, to a first approximation, there is no interference within a multipath component since all the signals are orthogonal. However a lack of orthogonality arises between multipath components, because these components take different paths from a transmitter and thus arrive at the receiver with different delays, and this is primarily the interference which the receiver of Figure 6b is intended to suppress - the interference between two signals with notionally orthogonal spreading codes arriving at the receiver in two different multipath components.

Referring to Figure 6b in more detail, as before the receiver comprises an antenna 622 and down converter (not shown) in the manner of a conventional spread spectrum receiver. The received signal is then passed to an interference estimator 624, a code offset tracking block 626, a channel estimator block 628, and a plurality of rake fingers, 634 via a delay element 630 and an interference cancellation unit 632. The code offset tracking block 626 tracks N multipath components of the received signal, providing N outputs for interference estimator 624 and for rake fingers 634 and for a plurality of respreaders 636. Each of the N multipath components has a different delay associated with it and thus the code tracking block 626 is configured to effectively provide N tracking loops, one for each multipath component to be processed by the rake receiver. In a similar way channel estimator 628 provides a plurality, N of channel estimate outputs, one for each multipath component to be processed. The channel estimator 628 comprises a plurality of CPICH code generators and a corresponding plurality of despreaders and preferably therefore also receives N code tracking inputs (not shown) from code offset tracking block 626. Thus the channel estimator 628 may operate in a conventional manner, for example using a plurality of channel estimators each as described with reference to Figure 2.

The function of the interference estimator 624 is to provide an estimate of the relevant transmitted signal, at the symbol level where the signal is modulated. Where an estimate of CPICH is required the interference estimator can, in effect, be dispensed with since the despread version of the CPICH signal is, broadly speaking, the same as the signal provided by the channel estimator 628. Where the interference from a more complex signal to be estimated the interference estimator may comprise a plurality of rake fingers or effectively another rake receiver. It will therefore be appreciated that the interference estimator will require inputs from code tracker 626, for each rake finger of interference estimator, and from channel estimator 628, to apply a channel estimate to the rake finger outputs, where more complex signals such as PCCPCH or multicode signals are to be estimated. The interference estimator has an output 625 which may comprise a single bit line, for example from a hard bit decision output of a rake receiver combiner or it may comprise a plurality of bit lines comprising, for example separate outputs from a plurality of rake fingers in interference estimator 624. In this latter case an input from channel estimator 628 may not be required by interference estimator 624 since the channel estimate may be implicit in the soft bit decision outputs. It will also be appreciated that where interference estimator 624 comprises a rake receiver this receiver need not have the same number of rake fingers and the number of rake fingers 634.

The output 625 from interference estimator 624 provides and input to the plurality of respreaders 636. Output (or outputs) 625 comprises one (or more) estimate (s) of one or more transmitted signals such as CPICH, PCCPCH and the like, at symbol level. These are respread by respreaders 636, with the appropriate delays for the different multipath components decoded by rake fingers 634 to provide a plurality of interference estimation outputs each comprising an estimate of the appropriate transmitted signal with a delay corresponding to the delay of a multipath component from the transmitter to the receiver. However the multipath components do not all arrive at the receiver with the same signal level (or phase) and thus a correction is made for the relative power of the multipath components by multiplying the estimates by the corresponding outputs from channel estimator 628 in a plurality of multipliers 638. The result is a plurality of interference estimates 640, preferably one for each multipath component of the received signal to be processed by rake fingers 634.

The plurality of interference estimate signals 640 provides a plurality of inputs to interference cancellation units 632. A further input 642 to the interference cancellation unit 632 is provided by the received signal, delayed by delay element 630 to take account of the delay introduced by the interference estimation process. The interference cancellation unit 632 has a plurality of outputs 644, one for each multipath component, comprising a plurality of versions of the input signal from which the relevant interference estimates have been subtracted or suppressed. Broadly speaking from each multipath component the estimated interference contributions from all the other multipath components are suppressed (there being no need to remove the estimate from the multipath component itself because within any one multipath component the signals are substantially orthogonal). The outputs 644 of the interference cancellation unit 632 provide inputs to the rake fingers 634, each output being provided to a corresponding rake finger. The rake fingers also have one input each from the code tracking block 626 and from the channel estimator 628 so that each rake finger has an input from which the relevant interference estimates have been suppressed and a channel and code tracking offset appropriate to the multipath component the rake finger is processing. The rake fingers 634 have N rake finger outputs 646 which provide inputs to a rake combiner 648 which, in turn, provides a combined (interference suppressed) output signal 649. The rake combiner 648 may operate in any conventional manner such as equal-gain combining or maximal-ratio combining.

The receiver of Figure 6b illustrates a general form of common channel interference suppression in which, broadly speaking, the interference contribution is estimated, respread, and then subtracted from the desired signal. Broadly speaking the code tracker 626 calculates the delay of one code relative to another and this is then weighted by the appropriate channel estimate and subtracted. Where the "interfering" signal is modulated with data the interference estimator 624 determines an estimate for what this data is so that the data can be respread appropriately. Where the "interfering" signal is unmodulated, and thus carries no data, this step can, however, be omitted. It will be appreciated that some form of code tracking must be applied to the received signal although it is also possible to repeat the code tracking after the input signal has been processed to provide a more accurate determination of the relevant multipath delays. Such a later, improved estimate is to be determined preferable not to cancel orthogonal signals from one another within a multipath component since these do not substantially interfere with one another and since if, for example, the CPICH pilot signal is removed entirely at an early stage in the processing this signal will not be available later for a code tracker to lock onto.

The skilled person will therefore appreciate that time division multiplexed data processing 508 of Figure 5 may be employed, for example, to common channel interference cancellation in W-CDMA. Such a procedure includes a number of operations whose complexity is determined by the multipath conditions and/or number of channels to be cancelled which in general, varies over time. Consequently the above-described DVS-type techniques may be applied to minimise the power consumption given a particular configuration.

Referring next to Figure 6c, this shows a basic channel equalisation training process 650 in which a training signal 651 is applied to a data channel 652 such an rf data channel, and also to a finite impulse response (FIR) filter-based equaliser structure 654. The FIR filter provides an output 664 which is compared 665 with the signal received over the channel 652 to provide an error signal which is used to adjust parameters of the equaliser 654 such that when the equaliser is applied to received data the effects of transmission through the channel 652 may be compensated. Filter 654 comprises a sequence of unit time delays 656a, b, c, d each providing an output to a variable gain block 658a, b, c, d, the outputs of which are summed 660a, b, c to provide filter output 664. All this is well understood by the skilled person.

In the filter/equaliser structure of Figure 6c the filter length (number of unit time delays and gain block multipliers) is determined by the length or delay spread of the channel 652. Thus in a time multiplexed implementation one or more of the functions within dashed box 654, such as gain coefficient multiplications 658, may be time multiplexed to provide a filter with an adjustable configuration and, in particular, a filter with a variable length. In this way the length of the filter may be matched to the length of the channel. If a channel span is observed which is lower than a specified maximum, the number of operations, such as coefficient multiplications and/or coefficient updates after training, can be reduced and the processing clock rate correspondingly lowered. This allows the supply voltage to the time-multiplexed processing also to be reduced and hence provides a DVS-type reduction in power consumption. The time multiplexed implementation of the filter coefficient calculations may be controlled by a clock/control unit 662 to control the configuration and the clock processing rate of the equaliser 654.

Although Figure 6c specifically illustrates a training process, embodiments of the invention may also be applied to operation of the filter after training, for example with the amount of multiplexing depending upon the channel span.

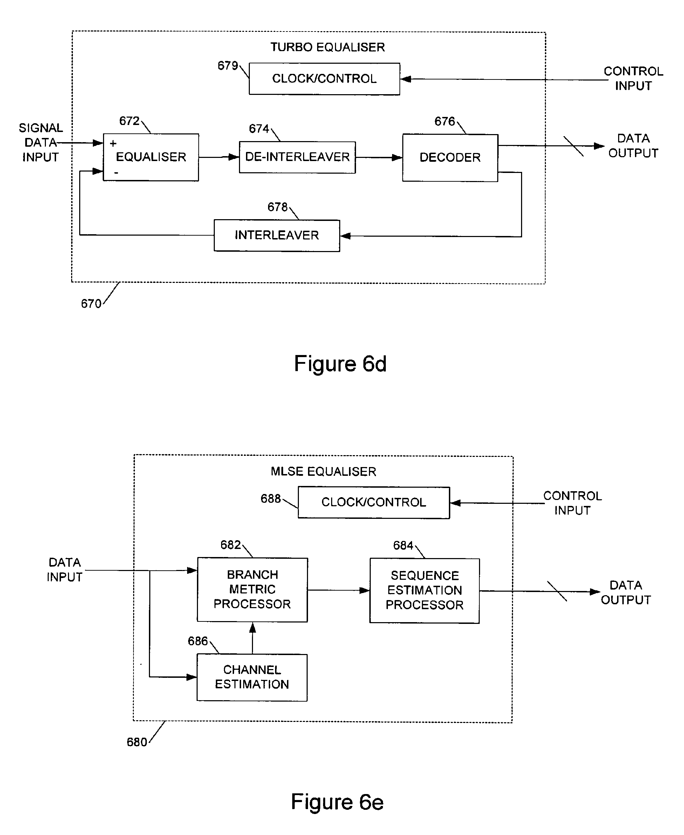

Figure 6d shows an outline block diagram of a turbo equaliser in which some or all of the functions within dashed box 670 may be implemented by time multiplexed data processing, such as data processing 508 of Figure 5.

As the skilled person will understand, broadly speaking turbo equalisation comprises an iterative process in which an initial equalisation stage 672 is followed by a deinterleaver 674 which provides output data from the equaliser 672 to a decoder 676, an output of the decoder being re-interleaved by an interleaver 678 and providing additional explicit information for the detection process. In the case of turbo equalisation both the equaliser 672 and decoder 672 provide (log) likelihood value outputs comprising soft estimates of transmitted codewords. The effect of the channel response on the data symbol is treated similarly to an error correction code and typically a soft output Viterbi algorithm (SOVA) is used for both. Turbo equalisation achieves close to optimal results but again the complexity of the technique varies significantly with the size of the channel delay spread and the symbol alphabet employed. An example of a simplified turbo equalisation procedure is described in Tuchler et al. (Minimum Mean Squared Error Equalization Using A-priori Information, Michael Tuchler, Andrew Singer, Ralf Koetter, IEEE Transactions on Signal Processing, vol. 50, pp. 673 - 683, March 2002).

Again some or all of the procedures within dashed box 670 may be implemented using an iterative data processing procedure for the data processing stage 508 of Figure 5. Likewise embodiments of the invention may be applied to a turbo decoder iterating between two decoders. As the skilled person will understand, iterative receiver techniques employ a number of operations per iteration, and a number of iterations is required to provide an acceptable quality of service. The exact number of iterations required can be difficult to predict and for a turbo decoder, for example, six or seven iterations are often specified as necessary for near-optimum performance. However in practice there are times when a much smaller number of iterations, such as only one or two iterations, will suffice for adequate performance. The number of useful iterations may vary due to quality of service requirements and with local rf conditions such as channel conditions, noise conditions, interference conditions and the like. Thus where a smaller number of iterations is adequate the turbo equalisation-decoding module 670 may be run at a lower clock rate and hence from a lower supply voltage to achieve DVS-type power savings. In practice the number of iterations which is acceptable under prevailing circumstances may be determined in a variety of ways including (but not limited to) inferring an acceptable number of iterations from previously received and decoded data such as a previously data block, codeword or frame. The time division multiplexed turbo equaliser-decoder function 670 of Figure 6d may be controlled along similar lines to those described above by a clock/control unit 679, as shown.

Figure 6e shows a further example, of an MLSE data processing operation including functions which may be time multiplexed in the receiver 500 of Figure 5. It may represent an equaliser or a decoder such as a Viterbi decoder.

Broadly speaking an MLSE (Maximum Likelihood Sequence Estimator) equaliser such as a Viterbi equaliser attempts to make a decision of a sequence of symbols rather than on each symbol in turn. In more detail, all possible received sequences are calculated at the receiver and convolved with the channel estimate. The output of this convolution process is then compared with the actual observation and the error between the received signal and all the possible sequences is found. The combination of expected data presenting the smallest error with respect to the received sampled signal under analysis is stored, becoming part of the so-called survivor path for this node or state.

This process continues for a predetermined number of states or, alternatively, until a complete packet of information has been received. At the end of the process the sequence presenting the smallest error is termed the survivor path and the sequence of states defined by this path is taken as the best estimate of the transmitted data, and thus becomes the decoded received data. The predetermined length or truncation depth after which a decision is made can be taken to be when the survivor paths for all possible states converge. This is generally taken to be a multiple of the channel span, such as between five and ten times the span.

The functions performed by an MLSE equaliser are outlined in Figure 6e and some or all of the functions within dashed box 680 may be performed by the time multiplexed data processing 508 in the receiver 500 of Figure 5. Referring to Figure 6e a branch metric processor 682 determines a branch metric for each possible pairing of a previous state of a sequence at an iteration $n$ - 1 with a current possible state at an iteration $n$ given the previous state. Branch metric processor 682 calculates a branch metric hypothesised sequence, for example based upon a least square error metric, using a channel estimate from channel estimation block 686. For each current state the previous state which provides the smallest metric is selected as a previous state for a next current state and the error metric is added to the metric for the preceding paths. The paths may be represented on a trellis diagram and will converge when traced back over a number of iterations. The complexity of a MLSE equaliser thus increases exponentially with the number of symbols $N$ in the symbol alphabet employed and with the number of channel paths (that is the channel length $L$ in symbol periods). A candidate sequence for output from the equaliser as decoded data is finally selected by a sequence estimation processor 684.

An MLSE equaliser can be thought of a state machine in which the size of the state space is determined by the channel memory. The repeated calculations which comprise the MLSE equalisation process may be time multiplexed in hardware or implemented using software running on a digital signal processor. In particular the branch metric processor calculations within dashed box 680 may be time multiplexed, although, in some embodiments the sequence estimation procedure may also be performed in a time multiplexed manner. It will be appreciated from the foregoing discussion that the branch metric and/or sequence estimation calculations which are to be performed vary with the symbol alphabet employed, and in particular with the channel length, and thus the implementation of the MLSE equaliser (that is its symbol alphabet and/or channel length) may be varied in accordance with the operating conditions. Particularly when the channel memory is small, that is when the delay spread is low, the power consumption of the MLSE operation may be reduced by reducing the clock speed of the MLSE equaliser and applying DVS-based techniques to reduce the supply voltage to the equaliser.

The above-described DVS-based techniques are particularly appropriate when applying MLSE equalisation with adaptive modulation when the number of states, rather than the trellis depth is changed. If for example the modulation is changed from BPSK$\rightarrow$ QPSK$\rightarrow$ 8PSK, the number of states changes from 2 to 8, and therefore processing in a time multiplexed implementation becomes four times faster. In such a situation the supply voltage can be adjusted dependent upon the number of (modulation) states or size of modulation symbol alphabet.

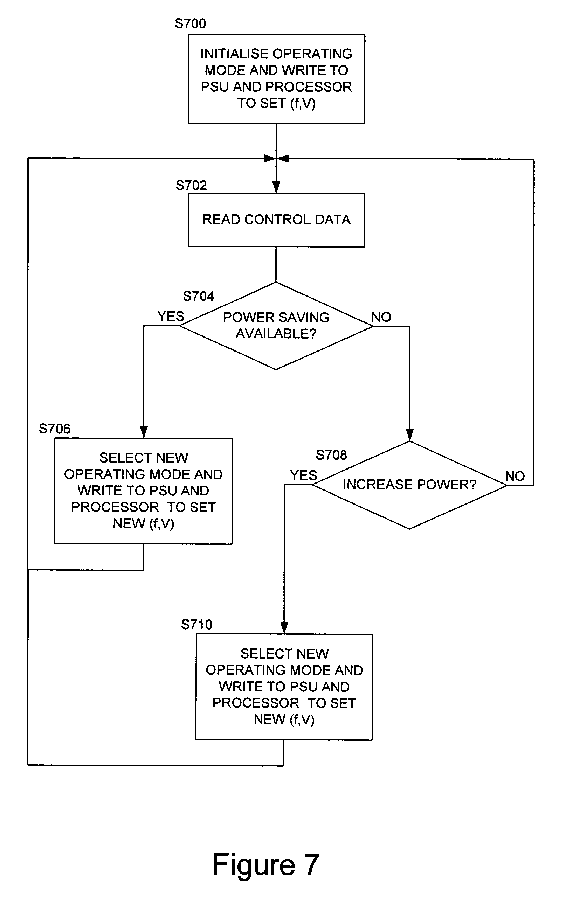

Referring now to Figure 7, this shows a flow diagram of the operation of the clock rate control-dynamic voltage scaling procedure employed in the receiver 500 of Figure 5.

At step S700 control processor 516 initialises an operating mode, for example using stored configuration data 514a, and outputs data on control line 518 to set a clock speed and number of data processing instantiations for time multiplexed processing 508, and outputs control data to power supply 522 on line 520 to set a DC supply voltage on line 526 for data processing 508. Then, at step S702, processor 516 reads control data from one or more of lines 528, 530, 532 and 534, and optionally reads further configuration data from memory 514, and then determines at step S704, whether a power saving is available. The determination at step S704 may comprise, for example a comparison of the number of data processing instantiations implemented by time multiplexed data processing 508 with a predicted or determined number of data processing instantiations as predicted or determined from data input to control processor 516.

If, at step S704, a power saving is available then, at step S706, processor 516 selects a new operating mode with a reduced clock frequency and supply voltage for data processing 508, for example by reading frequency and voltage data for one of a predetermined set of operating modes stored in memory 514. This data is then written to time multiplexed data processing 508 and to power supply 522 to set the new operating parameters and the procedure returns to step S702 to again read the control data.

If, at step S704, no power saving is available processor 516 then checks, at step S708, whether there is need to increase the clock rate (and hence power) of data processing 508 to permit an increased number of data processing instantiations. A need for an increased number of instantiations may be determined, for example, by a lower than acceptable bit error rate or other quality measure. If, at step S708, it is determined that there is a need for increased power processor 516 at step S710, selects a new operating mode, with an increased clock frequency and supply voltage, for example by reading data for a new mode from memory 514, and configures the receiver 500 to operate in this mode by writing appropriate control data into data processing 508 and power supply 522 using respective control lines 518 and 520. If, on the other hand, at step S708 it is determined that there is no need to increase the clock frequency (and hence power supply) to data processing 508 the system loops back to step S702.

The skilled person will recognise that the above-described embodiments of the invention provide a number of advantages including reduced overall receiver power consumption and, because of the time multiplexed processing, in many cases reduced hardware size. Embodiments of the invention also provide increased flexibility to assist a receiver in coping with changing multipath environments. In some cases, for example that of a rake receiver, this in turn permits the implementation of, in effect, a higher specification receiver without significantly increased, or even with reduced power consumption and hardware requirements. In rake receiver embodiments this is particularly advantageous for implementations of a rake receiver path searcher.

Applications of embodiments of the invention have been discussed with specific reference to receivers for wireless communications, but embodiments of the invention may also be employed in non-wireless applications in which low power processing is important, such as magnetic and/or optical disk drive read head circuitry. No doubt may other effective alternatives will occur to the skilled person and it will be understood that the invention is not limited to the described embodiments and encompasses modifications apparent to those skilled in the art lying within the spirit and the scope of the claims appended hereto.

**Claims**

1. A method of reducing power consumption in a data receiver, the receiver being configured to process a received signal using repeated implementations of substantially the same first data processing element, a rate of said repetitions being determined by a clock frequency of said first data processing element, the method comprising:

   determining a number of repetitions of said repeated implementations of said first data processing element;
   processing said receiving signal according to said determined number of repetitions;
   adjusting said number of repetitions in response to a power saving control signal; and

jointly reducing said clock frequency and a power supply voltage to said first data processing element in response to said control signal to reduce said receiver power consumption.

2. A method as claimed in claim 1 wherein the receiver is configured to process said signal in substantially real time, and wherein said receiver power consumption is reduced whilst maintaining said substantially real time processing capability.

3. A method as claimed in claim 1 or 2 wherein said receiver has a subsequent data processing element configured to input data from said repeated implementations of said first data processing element, and wherein the method further comprises writing data from said repeated implementations of said first data processing element into a store and asynchronously reading said data from said repeated implementations of said first data processing element from said store prior to providing said data to said subsequent data processing element.

4. A method as claimed in claim 1, 2 or 3 wherein said control signal is responsive to one or more of a desired or determined received signal quality, a noise and/or interference level, and a desired power consumption parameter.

5. A method as claimed in any preceding claim wherein said joint reducing of said clock frequency and power supply voltage comprises selecting a clock frequency and power supply voltage combination from a set of clock frequency-supply voltage combinations stored in the receiver.

6. A method as claimed in any preceding claim further comprising:

increasing said number of repetitions in response to a second control signal; and
jointly increasing said clock frequency and said power supply voltage in response to said second control signal.

7. A method as claimed in any one of claims 1 to 6 wherein said receiver is a rake receiver and said first data processing element comprises at least a time multiplexed correlator for said rake receiver.

8. A method as claimed in claim 6 wherein said first data processing element comprises a time multiplexed rake finger for said rake receiver.

9. A method as claimed in any one of claims 1 to 6 wherein said first data processing element comprises at least a portion of a turbo equaliser or turbo-decoder.

10. A method as claimed in any one of claims 1 to 6 wherein said data processing element comprises an interference canceller for said receiver.

11. A method as claimed in claims 1 to 6 wherein said data processing element comprises a finite impulse response filter or equaliser for said receiver.

12. A method as claimed in claims 1 to 6 wherein said data processing element comprises a maximum likelihood sequence estimator channel equaliser for said receiver.

13. Processor control code to, when running, implement the method of any preceding claim.

14. A data carrier carrying the processor control code of claim 13.

15. A power controller for a data receiver, the receiver being configured to process a received signal using repeated implementations of substantially the same first data processing element, a rate of said repetitions being determined by a clock frequency of said first data processing element, the power controller comprising:

means for determining a number of repetitions of said repeated implementations of said first data processing element;
means for adjusting said number of repetitions in response to a power saving control signal; and
means for jointly reducing said clock frequency and a power supply voltage to said first data processing element in response to said control signal to reduce said receiver power consumption.

16. A power controller as claimed in claim 14 wherein said receiver has a subsequent data processing element configured to input data from said repeated implementations of said first data processing element, and wherein the controller further comprises a buffer configured for storing said data from said repeated implementations of said first data processing element and configured to permit reading of said data from said repeated implementations of said first data processing element asynchronously with said storing, for provision to said subsequent data processing element.

17. A power controller as claimed in claim 15 or 16 wherein said receiver is a rake receiver and said first data processing element comprises at least a time multiplexed correlator for said rake receiver, preferably a time multiplexed rake finger for said rake receiver.

18. A receiver including a power controller as claimed in claim 15, 16 or 17.

19. A receiver for a data communication link, the receiver being configured to process a received signal in substantially real time using repeated implementations of substantially the same first data processing element, a rate of said repetitions being determined by a clock frequency of said first data processing element, the receiver including a control processor coupled to an instruction memory storing processor implementable instructions, the instructions comprising instructions for controlling the receiver to:

   repeatedly implement said first data processing element;
   adjust the number of repetitions of said implementation; and
   jointly control said clock frequency and a power supply voltage to said first data processing element in accordance with said adjustments to control power consumption of said receiver.

20. A receiver as claimed in claim 19, further comprising:

   a subsequent data processing element configured to input data from said repeated implementations of said first data processing element; and
   an elastic store to store data from said repeated implementations of said first data processing element for asynchronous provision to said subsequent data processing element.

21. A receiver as claimed in claim 19 or 20 wherein said receiver is a rake receiver and said first data processing element comprises at least a time multiplexed correlator for said rake receiver, preferably a time multiplexed rake finger for said rake receiver.

22. A data carrier carrying the processor implementable instructions of claim 19.

Figure 1
(PRIOR ART)

Figure 2
(PRIOR ART)

**302a**

Rake finger #1 / 310 / 318 / 316 / 306

Received spread signal / 304

Receiver filter

Despreading unit

Data channel spreading code aligns to path #1

312

Despreading unit

Pilot channel spreading code aligns to path #1

314

Channel estimation unit

Delay buffer

Channel estimate for path #1

Rake combiner

Combined demodulated signal

308

302b

Rake finger #M

n samples per chip

k samples per symbol

320   322

300

**Figure 3a**
**(PRIOR ART)**

410   412

CONTROLLER

416

POWER / 418

Received spread signal / 404

Receiver filter

402a

Rake finger #1

Despreading unit

Data channel spreading code aligns to path #1

Despreading unit

Pilot channel spreading code aligns to path #1

Delay buffer

Channel estimation unit

Channel estimate for path #1

406

Rake combiner

B U F F E R

414

Combined demodulated signal

408

402b

Rake finger #M

n samples per chip

M·n samples per chip

k samples per symbol

400

**Figure 4**

Figure 3b
(PRIOR ART)

Figure 3c
(PRIOR ART)

Figure 5

TIME MULTIPLEXED RAKE FINGERS

602 — CLOCK/CONTROL

CONTROL INPUT

606

SIGNAL DATA INPUT

RAKE FINGER 1 — 604a

DATA OUTPUT

RAKE FINGER 2

604b

RAKE FINGER M

604c

600

## Figure 6a

Training Signal — 651

652

CHANNEL

CHANNEL ESTIMATOR

656a
656b
656c — 656c
656d

UNIT TIME DELAY
UNIT TIME DELAY
UNIT TIME DELAY
UNIT TIME DELAY

a0 — 658a
a1 — 658b
a2 — 658c
an — 658d

660a
660b
660c

654

664

+ DATA OUTPUT
665 −

662 — CLOCK/CONTROL

CONFIGURATION CONTROL INPUT

error

650

## Figure 6c

Figure 6b

TURBO EQUALISER

679 — CLOCK/CONTROL ← CONTROL INPUT

SIGNAL DATA INPUT → 672 + − EQUALISER → 674 DE-INTERLEAVER → 676 DECODER → DATA OUTPUT

678 INTERLEAVER

670

## Figure 6d

MLSE EQUALISER

688 — CLOCK/CONTROL ← CONTROL INPUT

DATA INPUT → 682 BRANCH METRIC PROCESSOR → 684 SEQUENCE ESTIMATION PROCESSOR → DATA OUTPUT

686 CHANNEL ESTIMATION

680

## Figure 6e

S700

INITIALISE OPERATING
MODE AND WRITE TO
PSU AND PROCESSOR
TO SET (f,V)

S702

READ CONTROL DATA

S704

YES — POWER SAVING
AVAILABLE? — NO

S706

SELECT NEW
OPERATING MODE AND
WRITE TO PSU AND
PROCESSOR  TO SET
NEW (f,V)

S708

YES — INCREASE POWER? — NO

S710

SELECT NEW
OPERATING MODE AND
WRITE TO PSU AND
PROCESSOR  TO SET
NEW (f,V)

# Figure 7